# EUROPÄISCHE PATENTSCHRIFT

(11) **EP 2 751 460 B1**
(45) Veröffentlichungstag und Bekanntmachung des Hinweises auf die Patenterteilung: **25.10.2017**
(21) Anmeldenummer: 12743444.7
(22) Anmeldetag: 31.07.2012
(51) Int. Cl.: F16K 31/06

(54) **DICHTUNG UND STEUEREINRICHTUNG MIT DIESER DICHTUNG**
SEAL, AND CONTROL DEVICE HAVING SAID SEAL
JOINT D'ÉTANCHÉITÉ ET DISPOSITIF DE COMMANDE MUNI DUDIT JOINT D'ÉTANCHÉITÉ

(30) Priorität: 01.09.2011 DE 102011082007
(43) Veröffentlichungstag der Anmeldung: 09.07.2014
(73) Patentinhaber: Rausch & Pausch GmbH, 95100 Selb (DE)
(72) Erfinder: SCHLICK, Matthias, 08606 Oelsnitz (DE); DÖHLA, Werner, 95482 Gefrees (DE); SEEWALD, Olaf, 95448 Bayreuth (DE)
(74) Vertreter: Klunker IP Patentanwälte PartG mbB
(86) Internationale Anmeldenummer: PCT/EP2012/064961
(87) Internationale Veröffentlichungsnummer: WO 2013/029903

(56) Entgegenhaltungen:
- EP-A2- 0 188 651
- WO-A1-2005/102807
- GB-A- 2 332 261
- US-A- 4 484 512

## Beschreibung

Die Erfindung betrifft allgemein einen Luftfederventilblock für ein Luftfedersystem für Fahrzeuge und betrifft im Besonderen ein elektromagnetisches Ventil für einen solchen Luftfederventilblock, um den Luftaustausch innerhalb des Luftfedersystems zu beeinflussen, eine Steuereinrichtung für das elektromagnetische Ventil sowie eine Dichtung für die Steuereinrichtung.

In einem Luftfedersystem eines Fahrzeugs regeln Ventile, sogenannte Quersperrventile, die Luftzufuhr zwischen der linken und rechten Fahrzeugseite, indem die Luftbälge des Luftfedersystems mit Luft gefüllt oder Luft abgelassen wird. Dies dient auch der Einstellung der Höhe des Fahrzeugs, der sogenannten elektrischen Niveauregulierung. Hierzu können beispielsweise Speicher des Luftfedersystems zugeschaltet oder gesperrt werden oder die Luftbälge können mit Zusatzvolumen verbunden werden. Insbesondere können elektromagnetisch betätigte Ventile in einem Luftfedersystem eines Fahrzeugs als Quersperrventil in einem Luftfederventilblock des Luftfedersystems eingesetzt werden.

Aus der WO 2005/102807 A1 ist ein Magnetventil bekannt, das als Quersperrventil in einem Luftventilfederblock verwendet werden kann. Das Magnetventil weist ein elastisches Dichtelement zum Anliegen an einen Dichtsitz in einer Schließposition des Ventils sowie einen mit dem Dichtelement zusammenwirkenden Steuerkolben bzw. Magnetanker auf. Der Steuerkolben kann mittels einer elektrisch bestrombaren Spule entgegen einer Federkraft axial verlagert werden, um das Ventil zu öffnen. Bei großen Nennweiten des Ventils und hohen Druckdifferenzen muss die Feder derart stark ausgebildet sein, dass das Ventil auch dann mittels der Federkraft in der Schließposition bleibt, wenn der pneumatische Druck im System der Federkraft entgegenwirkt. Falls der Systemdruck umgekehrt in die Richtung der Federkraft wirkt, muss zum Öffnen des Ventils eine hohe Magnetkraft bereitgestellt werden, um die Federkraft und die Druckdifferenz (sowie Reibungskräfte im Ventil) zu überwinden. Das bekannte Ventil stößt dabei an Grenzen.

Zur Lösung dieses Problems könnte eine Druckausgleichsbohrung durch das axial verschiebliche Bauteil des Ventils, insbesondere den Steuerkolben oder Magnetanker, vorgesehen werden. Der Systemdruck würde dann von beiden Seiten auf das axial verschiebliche Bauteil wirken und wäre somit idealerweise ausgeglichen, so dass zum Öffnen des Ventils im Wesentlichen nur die Federkraft überwunden werden müsste. Dabei müsste jedoch das axial verschiebliche Bauteil dichtend geführt werden, da sonst im Ventil eine Leckage durch die Druckausgleichsbohrung hindurch bestehen würde.

Die Erfindung betrifft daher insbesondere eine Dichtung, mit der axial relativ zueinander verschiebliche Bauteile radial gegeneinander abgedichtet werden. Solche Dichtungen finden Anwendung in Steuereinrichtungen, wie zum Beispiel in Ventilen oder Stellkolben, die mittels Druckbeaufschlagung, insbesondere Pneumatikdruck, betätigt werden.

Häufig müssen Dichtungen für einen derartigen Zweck klein, leicht und preiswert sein. Sie übernehmen dabei Dichtungsfunktion in der axialen Bewegungsrichtung und dichten außerdem in radialer Richtung nach innen und außen. Typische Vertreter dieser sogenannten "dynamischen" Dichtungen sind Tandemdichtungen, Quad-Ringe oder einfach O-Ringe. Ein Quad-Ring hat anders als ein O-Ring einen in etwa quadratischen oder X-förmigen Querschnitt mit zwei radial außen liegenden und zwei radial innen liegenden, axial zueinander beabstandeten Dichtlippen. Eine Tandemdichtung umfasst dagegen einen Stützkörper für einen radial innen liegenden O-Ring zur Abdichtung nach innen und einen radial außen liegenden O-Ring zur Abdichtung nach außen und kann mit einem Gleitring zum Beispiel aus PTFE kombiniert sein, der zwischen einem O-Ring und dem beweglichen Bauteil liegt. Der Gleitring übernimmt dabei eine Führungsfunktion für das bewegliche Bauteil. Zur Verbesserung der Führungsfunktion kann ein zusätzlicher Führungsring axial benachbart zum Gleitring Anwendung finden.
In EP 0 188 651 A2 ist eine Dichtung für ein hin- und hergehendes und/oder sich drehendes Maschinenteil offenbart. Die Dichtung umfasst einen Haltering und einen Führungsring mit einer Führungsfläche zur Führung des beweglichen Maschinenteils. Auf beiden Seiten des Führungsrings sind Dichtlippen vorgesehen, die an dem beweglichen Maschinenteil anliegen. Primäre Aufgabe der vorliegenden Erfindung ist es daher, einen Luftfederventilblock für ein Luftfedersystem von Fahrzeugen vorzuschlagen, der auch bei hohen Systemdrücken zuverlässig arbeitet. Sekundäre Aufgabe der vorliegenden Erfindung ist es, eine dynamische Dichtungsanordnung und eine damit ausgerüstete Steuereinrichtung bzw. ein damit ausgerüstetes elektromagnetisch betätigtes Ventil vorzuschlagen, welche die vorgenannten Funktionalitäten (axiale und zweiseitig radiale Dichtungsfunktion sowie axiale Führungsfunktion) erfüllt und den vorgenannten Randbedingungen (klein, leicht, preiswert) genügt, um vorteilhaft in dem Luftfederventilblock verwendet werden zu können.
Diese Aufgabe wird durch eine Dichtung mit den Merkmalen des Patentanspruchs 1 gelöst. In davon abhängigen Ansprüchen sind vorteilhafte Weiterbildungen und Ausgestaltungen der Erfindung angegeben.
Dementsprechend besitzt die erfindungsgemäße Dichtung einen Dichtkörper aus elastomerem Material mit zwei axial beabstandeten, radial außen liegenden Dichtlippen und zwei axial beabstandeten, radial innen liegenden Dichtlippen, so wie dies prinzipiell von Quad-Ringen bekannt ist. Darüber hinaus weist die Dichtung einen den Dichtkörper tragenden Stützkörper auf. Dieser Stützkörper besteht aus einem härteren Material als der Dichtkörper und weist einen radial freiliegenden Abschnitt auf, der sich in axialer Richtung zwischen zwei Dichtlippen erstreckt und als Führungsabschnitt mit axialer Führungsfunktion für das bewegliche Bauteil dient. Um im Betrieb der Dichtung diese axiale Führungsfunktion übernehmen zu können, muss die radiale Abmessung des Führungsabschnitts relativ zu den radialen Abmessungen der benachbarten beiden Dichtlippen entsprechend bemessen sein. Insoweit ist es wesentlich, dass sich die beiden Dichtlippen in radialer Richtung geringfügig über den Führungsabschnitt hinaus erstrecken. Denn nur dann können die beiden Dichtungslippen im Betrieb Dichtungsfunktion übernehmen, während der dazwischen liegende radial freiliegende Führungsabschnitt die axiale Führungsfunktion übernimmt.

Die erfindungsgemäße Dichtung integriert alle wesentlichen Funktionen einer dynamischen Dichtungsanordnung in einem Bauteil, denn sie dichtet die beiden relativ zueinander beweglichen Bauteile nicht nur sowohl in axialer Bewegungsrichtung als auch radial nach innen und nach außen ab, sondern sie übernimmt gleichzeitig die Führung des axial bewegten Bauteils.

Aufgrund der zwei innen liegenden und zwei außen liegenden Dichtlippen kann die Dichtung insgesamt, zumindest aber der Dichtkörper, vorteilhaft symmetrisch ausgeführt werden und dementsprechend in entgegengesetzten Bewegungsrichtungen des beweglichen Bauteils in gleicher Weise abdichten.

Vorzugsweise weist der Stützkörper auf seiner dem Führungsabschnitt gegenüberliegenden Seite einen Verankerungsabschnitt auf, über den die Dichtung mit dem anderen der beiden Bauteile fixiert werden kann. Der Verankerungsabschnitt ist wiederum zwischen zwei Dichtlippen angeordnet und erstreckt sich zu dem vorgenannten Zweck in radialer Richtung über diese beiden Dichtlippen hinaus. Der Verankerungsabschnitt kann dann beispielsweise in einer Umfangsnut des betreffenden Bauteils so verankert werden, dass sich die beiden Dichtlippen jeweils benachbart zu dieser Umfangsnut in dichtender Weise an das Bauteil anlegen.

Vorzugsweise ist der Führungsabschnitt des Stützkörpers an einer nach radial innen weisenden Oberfläche der Dichtung ausgebildet, um z.B. ein in der Dichtung laufendes, axial bewegtes Antriebselement einer Steuereinrichtung zu führen. Der dem Führungsabschnitt gegenüberliegende Verankerungsabschnitt erstreckt sich bei dieser Variante dementsprechend nach radial außen. Es ist aber grundsätzlich auch denkbar, dass der Stützkörper sowohl radial innen als auch radial außen einen freiliegenden, sich in axialer Richtung zwischen zwei Dichtlippen erstreckenden Führungsabschnitt aufweist, nämlich z.B. für den Fall, dass beide Bauteile, die mittels der erfindungsgemäßen Dichtung radial gegeneinander abgedichtet werden, bewegliche Bauteile sind. In diesem Falle würde lediglich die Dichtung stationär fixiert, während die beiden daran angrenzenden Bauteile jeweils beweglich sind.

Das elastomere Material des Dichtkörpers kann vorteilhaft im Urformprozess an den Stützkörper angeformt sein, also beispielsweise angegossen oder insbesondere im Spritzgießverfahren angespritzt sein. In dieser Weise ist die Herstellung preiswert und maßgenau. Das elastomere Material des Dichtkörpers durchsetzt den Stützkörper. Dadurch wird eine dauerhaft stabile Verbindung zwischen diesen beiden Dichtungskomponenten geschaffen. Besonders bevorzugt ist es insoweit, wenn der Stützkörper zumindest einen axialen Durchgang aufweist, der mit elastomerem Material des Dichtkörpers gefüllt ist. So kann eine stofflich homogene Verbindung zwischen den axial zueinander beabstandeten Dichtlippen hergestellt werden.

Als elastomeres Dichtkörpermaterial wird Ethylen-Propylen-DienKautschuk (EPDM) bevorzugt. Dem EPDM kann vorteilhaft PTFE zugesetzt werden. Die Härte des Dichtkörpermaterials beträgt vorzugsweise zwischen 65 und 80 Shore A, insbesondere etwa 75 Shore A.

Das Material des Stützkörpers kann metallisch sein, ist vorzugsweise aber ein polymeres Material. Der Vorteil des polymeren Materials liegt einerseits im geringeren Gewicht. Andererseits lässt sich die Dichtung dann besonders vorteilhaft im zweistufigen Spritzgussverfahren schnell und preiswert herstellen. Bei dem polymeren Material des Stützkörpers handelt es sich vorzugsweise um einen Thermoplast oder auch einen Duroplast, gegebenenfalls mit geeigneten Zusätzen zur Verbesserung der Gleiteigenschaften, und jedenfalls nicht um ein Elastomer. Bevorzugt wird der Thermoplast Polyphenylensulfid (PPS) eingesetzt. Vorteilhaft ist das Stützkörpermaterial glasfaserverstärkt, z.B. ist PPS GF40 besonders geeignet.

Ein erfindungsgemäßer Luftfederventilblock für ein Luftfedersystem eines Fahrzeugs umfasst ein elektromagnetisch betätigtes Ventil mit der vorbeschriebenen Dichtung. Das Ventil weist insbesondere eine Druckausgleichsbohrung in axialer Richtung durch den axial beweglichen Steuerkolben auf, so dass das Ventil auch bei hohen Systemdrücken zuverlässig arbeitet.

Nachfolgend wird die Erfindung beispielhaft anhand der anhängenden Zeichnungen dargestellt. Darin zeigen:
Fig. 1 ein elektromagnetisch betätigtes Ventil aus dem Stand der Technik,
Fig. 2 ein erfindungsgemäßes elektromagnetisch betätigtes Ventil mit einer dynamischen Dichtung und
Fig. 3 die dynamische Dichtung aus dem Ventil aus Fig. 2 im Detail.

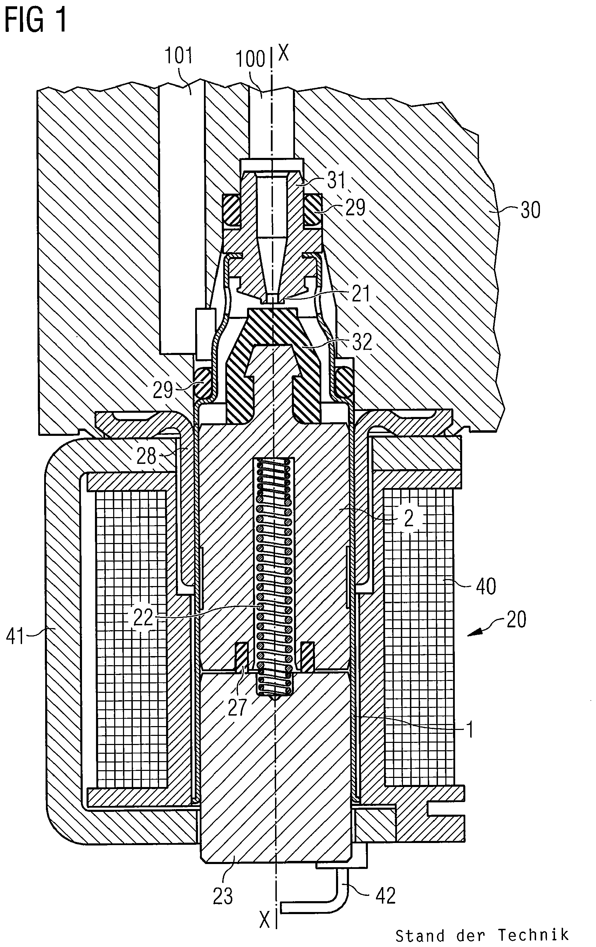

Fig. 1 zeigt ein bekanntes elektromagnetisch betätigtes Ventil aus dem Stand der Technik (WO 2005/102807 A1), welches beispielsweise als Quersperrventil für ein Luftfedersystem eines Fahrzeugs verwendet werden kann. Das Ventil 20 ist in einen Ventilblock 30 eingesetzt und öffnet bzw. schließt die Verbindung zwischen Ventilanschlüssen 100,101, wobei das Ventil 20 in beiden Richtungen durchströmt werden kann. O-Ringe 29 dichten das Ventil 20 gegen den Ventilblock 30 ab. Fig. 1 zeigt das Ventil 20 im bestromten Zustand, in welchem der Ventildurchgang 21 geöffnet ist.

Das Ventil 20 weist einen axial verschieblichen Steuerkolben 2 auf, der in einer stationären Hülse 1 geführt ist. Mit der Hülse 1 ist ein Metallkern, das sogenannte Polteil 23, fest verbunden. Eine elektrisch bestrombare Spule 40 ist um das Polteil 23 und den Magnetanker 2 angeordnet und wird über Anschlüsse 42 mit Strom versorgt. Im dargestellten bestromten Zustand wird ein elektromagnetisches Feld erzeugt, das den Steuerkolben 2, welcher als Magnetanker wirkt, in Richtung des Polteils 23 bewegt. Dabei wird die Kraft einer Feder 22 überwunden, welche der Magnetkraft entgegenwirkt und das Ventil 20 in die Schließposition drängt. Ein Flussleitrohr 28 sowie ein Bügel 41 dienen der Homogenisierung des elektromagnetischen Feldes. Puffer 27 dämpfen den Kontakt zwischen dem Steuerkolben 2 und dem Polteil 23 und erhalten einen Restluftspalt.

Zum Schließen des Ventils 20 wird mittels der Kraft der Feder 22 ein vorzugsweise elastisches Dichtelement 32 gegen einen ebenfalls vorzugsweise elastischen Dichtsitz 31 gedrängt und dichtet den Ventilanschluss 100 gegen den Ventilanschluss 101 ab. Die Feder ist derart ausgebildet, dass sie das Ventil 20 in der Schließposition hält, auch wenn die Druckdifferenz der Federkraft entgegenwirkt. Zum Öffnen des Ventils 20 überwindet die Magnetkraft die Kraft der Feder 22 und gegebenenfalls die Druckdifferenz zwischen den Ventilanschlüssen 100,101, falls die Druckdifferenz in Richtung der Federkraft wirkt. Bei großen Nennweiten des Ventils 20 und großen Druckdifferenzen, beispielsweise mehr als 20 bar, 10 bar oder zumindest 5 bar, ist dazu eine sehr hohe Magnetkraft erforderlich, da dann eine starke Feder notwendig ist, um das Ventil 20 auch bei hohen Druckdifferenzen geschlossen zu halten.

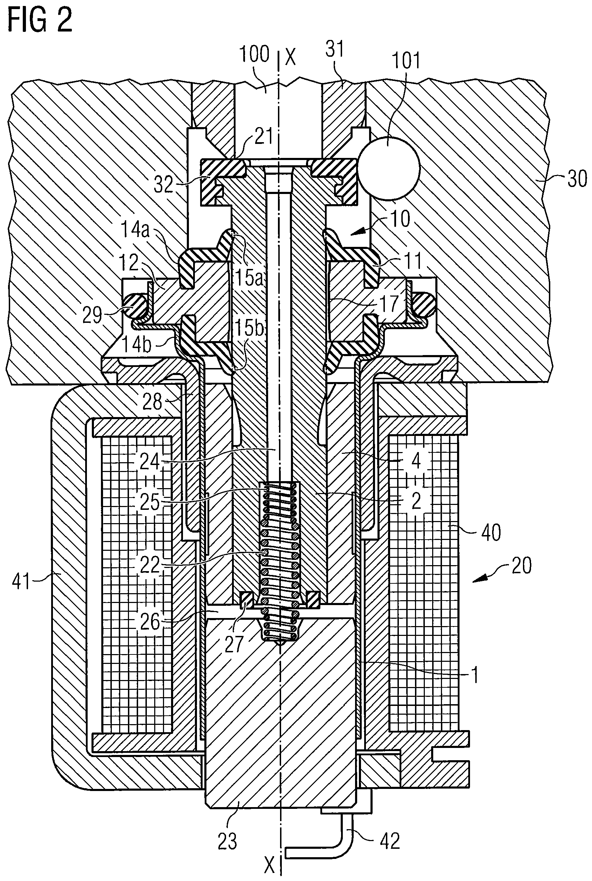

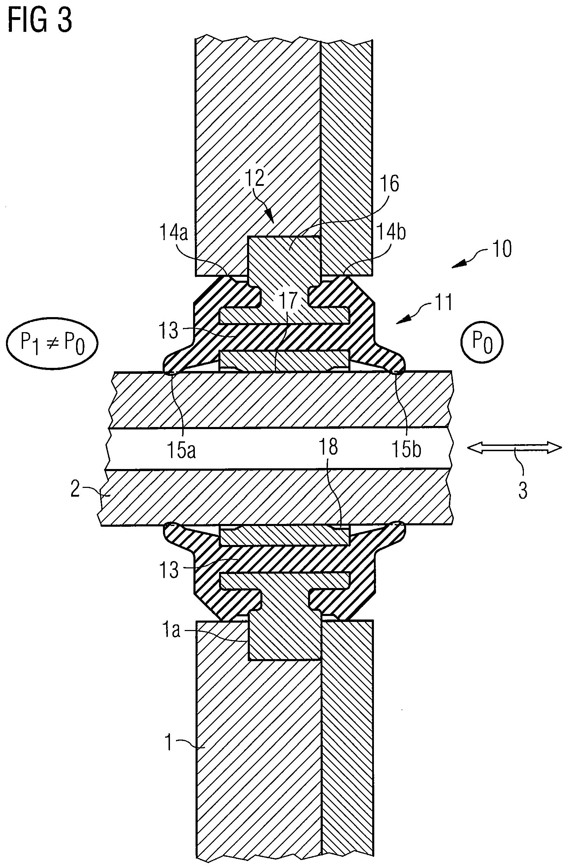

Um dieses Problem zu vermeiden, besitzt das in Fig. 2 dargestellte erfindungsgemäße Ventil 20 eine Druckausgleichsbohrung 24, welche den Ventilanschluss 100 durch den Steuerkolben 2 hindurch mit der Bohrung 25 für die Feder 22 und insbesondere mit dem Luftspalt 26 und somit der Rückseite des Steuerkolbens 2 verbindet. Da durch die Druckausgleichsbohrung 24 die beiden Druckseiten des Ventils 20 verbunden werden, ist, um eine Leckage zu vermeiden, eine radiale und axiale Abdichtung bei gleichzeitiger Führung des Steuerkolbens 2 notwendig. Dies erfolgt durch eine dynamische Dichtung 10, welche nachfolgend im Zusammenhang mit Fig. 3 näher erläutert wird.

In Fig. 2 ist der unbestromte, geschlossene Zustand des Ventils 20 dargestellt. Der Steuerkolben 2 weist einen separaten, jedoch mit dem Steuerkolben 2 verbundenen Magnetanker 4 auf. Wie in Fig. 1 gezeigt, können der Steuerkolben 2 und der Magnetanker 4 jedoch auch ein integrales Bauteil bilden. Der grundsätzliche Aufbau und die Funktionsweise des in Fig. 2 dargestellten Ventils 20 entsprechen ansonsten dem Aufbau und der Funktionsweise des in Fig. 1 dargestellten Ventils 20. Das Ventil 20 aus Fig. 2 ist ebenfalls für die Verwendung in einem Luftfedersystem eines Kraftfahrzeugs vorgesehen und kann in einen entsprechenden Luftfederventilblock 30 eingesetzt werden.

Die Druckausgleichsbohrung 24 verläuft in axialer Richtung, im Wesentlichen entlang der Längsachse X-X des Ventils 20. Im Bereich des Ventildurchgangs 21 und der Dichtlippen 15a, 15b der dynamischen Dichtung 10 ist im Wesentlichen die gleiche Nennweite vorgesehen, insbesondere weist der Dichtsitz 31 im Wesentlichen die gleiche Nennweite wie die Dichtlippen 15a, 15b auf. Dadurch ist ein Druckausgleich möglich, wie nachfolgend erläutert wird.

Falls der Druck an dem Ventilanschluss 100 anliegt, gelangt der Druck über die Druckausgleichsbohrung 24 und die Bohrung 25 in den Luftspalt 26 auf die Rückseite des Steuerkolbens 2 und an den Seiten des Magnetankers 4 vorbei zu der Dichtlippe 15b der dynamischen Dichtung 10, so dass der Druck im Wesentlichen keine Kraft auf den Steuerkolben 2 ausübt. Falls der Druck an dem anderen Ventilanschluss 101 anliegt, ist der Druck bezüglich des Steuerkolbens 2 auch im Wesentlichen ausgeglichen, da der Druck an dem Dichtsitz 31 und der Dichtlippe 15a der dynamischen Dichtung 10 anliegt, welche im Wesentlichen die gleiche Nennweite aufweisen. Insgesamt ist somit einerseits keine verstärkte Feder 22 notwendig, die das Ventil 20 geschlossen hält, wenn der Druck an dem Ventilanschluss 100 anliegt, so dass andererseits auch keine verstärkte Magnetkraft notwendig ist, die im Extremfall die Federkraft, die Druckdifferenz sowie etwaige Reibungskräfte überwinden müsste. Das Ventil 20 gemäß Fig. 2 ist somit auch für große Nennweiten und hohe Druckdifferenzen geeignet.

Fig. 3 zeigt die dynamische Dichtung 10 des Ventils 20 aus Fig. 2 in weiterem Detail. Gezeigt ist ein stationäres Bauteil 1 und ein bewegliches Bauteil 2, welches in entgegengesetzten Richtungen 3 relativ zu dem stationären Bauteil 1 verschieblich ist. Die beiden Bauteile 1 und 2 sind mittels der dynamischen Dichtung 10 radial nach innen und außen gegeneinander abgedichtet. In dem Ventil 20 aus Fig. 2 ist das stationäre Bauteil die Hülse 1 und das axial bewegliche Bauteil der Steuerkolben 2, auch Stößel genannt. Die Dichtung 10 dichtet gleichzeitig zwei Druckräume mit unterschiedlichen Drücken P0 und P1 in axialer Richtung gegeneinander ab. Die dargestellte Dichtung 10 ist besonders geeignet für die Anwendung in Ventilen für Luftfedersysteme wie oben beschrieben aber auch für andere Steuereinrichtungen, wie Ventile und Stellkolben, die mittels Druckbeaufschlagung, insbesondere Pneumatikdruck, betätigt werden und bei denen ein Antriebselement mittels des beweglichen Bauteils 2 betätigt wird. Das stationäre Bauteil 1 ist wie beschrieben eine Hülse, zum Beispiel in Form eines Führungszylinders oder einer beliebigen Wandung, beispielsweise eine Druckkammerzwischenwand oder eine Gehäuseaußenwand, die die Dichtung 10 in Umlaufrichtung umschließt.

Die Dichtung 10 besteht vorzugsweise aus lediglich zwei Komponenten, nämlich einem Dichtkörper 11 aus elastomerem Material, z.B. EPDM mit der Härte 75 Shore A und PTFE-Zusatz, und einem damit integral ausgebildeten Stützkörper 12 aus einem im Vergleich zum Dichtkörper wesentlich härteren Kunststoffmaterial, z.B. glasfaserverstärktem PPS. Die beiden Komponenten 11 und 12 der Dichtung 10 sind im zweistufigen Spritzgießverfahren hergestellt, zunächst die harte Komponente 12, welche anschließend mit der elastomeren Komponente 11 umspritzt wird. Um eine zuverlässige integrale Verbindung der beiden Komponenten sicherzustellen, ist der Stützkörper 12 mit über den Umfang verteilten Durchgängen 13 versehen, welche mit dem elastomeren Material des Dichtkörpers 11 vorzugsweise vollständig gefüllt sind.

Zumindest der Dichtkörper 11 und vorzugsweise die gesamte Dichtung 10 einschließlich des Stützkörpers 12 sind symmetrisch in der Weise aufgebaut, dass ihr axialer Querschnitt bezogen auf eine radiale Symmetrieachse klappsymmetrisch ist. So besitzt die Dichtung 10 unabhängig von der Bewegungsrichtung 3 dieselben Dichtungseigenschaften, und auch die Orientierungsrichtung bei ihrer Anordnung zwischen den beiden Bauteilen 1 und 2 ist unkritisch.

Zu beiden Seiten dieser Symmetrieachse weist der Dichtkörper 11 sowohl an seiner radial innen liegende Seite als auch an seiner radial außen liegenden Seite jeweils (mindestens) eine Dichtlippe auf, insgesamt also (mindestens) vier Dichtlippen. Zwischen den beiden äußeren Dichtlippen 14a, 14b und den beiden radial inneren Dichtlippen 15a, 15b besitzt der Stützkörper 12 jeweils einen radial freiliegenden Abschnitt 16 und 17. Der radial außen liegende Abschnitt 16 des Stützkörpers 12 erstreckt sich in radialer Richtung über die beiden benachbarten Dichtlippen 14a, 14b hinaus und bildet so einen Verankerungsabschnitt, mittels dessen die Dichtung 10 in einer Aussparung 1a, beispielsweise in einer Umfangsnut, des Bauteils 1 verankert ist.

Der auf der radial innen liegenden Seite freiliegende Abschnitt 17 des Stützkörpers 12 ist dagegen als Führungsabschnitt ausgebildet und übernimmt im Betrieb der Steuereinrichtung axiale Führungsfunktion für das axial verschiebliche Bauteil 2. Um diese Führungsfunktion gewährleisten zu können, beträgt die axiale Erstreckungslänge des Führungsabschnitts mindestens ein Drittel und vorzugsweise die Hälfte oder mehr als die Hälfte der Gesamtbreite der Dichtung 10. Das Verhältnis von Führungsabschnittlänge L und Nenndurchmesser D liegt vorzugsweise bei L/D ≥ 0,4, insbesondere L/D ≥ 0,5. Bei einem Nenndurchmesser von z.B. 5,9 mm beträgt die Führungsabschnittlänge vorzugsweise etwa 3,2 mm (Verhältnis L/D etwa 0,54).

Das bewegliche Bauteil 2 gleitet im Führungsabschnitt 17 des Stützkörpers 12. Zu diesem Zweck wird die Führung als knappe Spielpassung ausgeführt und vorzugsweise mit Öl oder Fett geschmiert. Das Minimalspiel der Passung sollte größer als 0,025 mm und das Maximalspiel kleiner als 0,150 mm sein. Vorzugsweise liegt das Spiel zwischen 0,034 und 0,102 mm. An den Führungsabschnitt 17 schließen sich beidseitig Einlaufschrägen 18 an, die die Öl- oder Fettschmierung zwischen dem Stützkörper 12 und dem beweglichen Bauteil 2 im Bereich des Führungsabschnitts 17 fördern.

Des Weiteren ist von Bedeutung, dass sich die beiden Dichtlippen 15a, 15b, zwischen denen sich der Führungsabschnitt 17 des Stützkörpers 12 erstreckt, in radialer Richtung über den Führungsabschnitt 17 hinaus erstrecken, damit sie im Betrieb der Steuereinrichtung ihre Dichtungsfunktion gegenüber dem beweglichen Bauteil 2 erfüllen können. Dies ist in Figur 1 schematisch dergestalt dargestellt, dass sich die beiden Dichtlippen 15a, 15b in das bewegliche Bauteil 2 hineinerstrecken, obwohl sie sich natürlich tatsächlich im Betriebszustand an die äußere Oberfläche des beweglichen Bauteils 2 anlegen.

Die Dichtung 10 kann auch umgekehrt so ausgebildet werden, dass der Verankerungsabschnitt 16 auf der radial innen liegenden Seite und der Führungsabschnitt 17 auf der radial außen liegenden Seite der Dichtung 10 angeordnet sind. Dies ist zweckmäßig für Anwendungen, bei denen das radial innen liegende Bauteil 2 stationär und das radial außen liegende Bauteil 1 beweglich sind. Alternativ kann anstelle des radial außen liegenden Verankerungsabschnitts 16 auch dort ein radial freiliegender Führungsabschnitt ähnlich dem Führungsabschnitt 17 vorgesehen werden. Dies ist für Anwendungen sinnvoll, bei denen beide Bauteile 1 und 2 beweglich sind. In diesem Falle würde dann die Dichtung 10 in axialer und radialer Richtung ortsfest fixiert und insoweit entsprechend angepasst werden.

## Patentansprüche

1. Dichtung (10) zum gegenseitigen radialen Abdichten zweier axial relativ zueinander verschieblicher Bauteile (1, 2), umfassend
- einen Dichtkörper (11) aus elastomerem Material mit zwei axial beabstandeten, radial außenliegenden Dichtlippen (14a, 14b) und zwei axial beabstandeten, radial innenliegenden Dichtlippen (15a, 15b) und
- einen den Dichtkörper (11) tragenden Stützkörper (12), welcher aus einem härteren Material besteht als der Dichtkörper (11),
wobei der Stützkörper (12) einen radial freiliegenden, sich in axialer Richtung zwischen zwei Dichtlippen (15a, 15b) erstreckenden Führungsabschnitt (17) aufweist, wobei sich diese zwei Dichtlippen (15a, 15b) in radialer Richtung über den Führungsabschnitt (17) hinaus erstrecken,
**dadurch gekennzeichnet, dass** das Material des Dichtkörpers (11) den Stützkörper (12) durchsetzt.

2. Dichtung nach Anspruch 1, wobei der Stützkörper (12) einen dem Führungsabschnitt (17) gegenüberliegenden Verankerungsabschnitt (16) aufweist, der zwischen zwei Dichtlippen (14a, 14b) angeordnet ist und sich in radialer Richtung über diese zwei Dichtlippen (14a, 14b) hinaus erstreckt.

3. Dichtung nach Anspruch 1 oder 2, wobei der Führungsabschnitt (17) des Stützkörpers (12) an einer nach radial innen weisenden Oberfläche der Dichtung (10) ausgebildet ist.

4. Dichtung nach einem der Ansprüche 1 bis 3, wobei das Material des Dichtkörpers (11) im Urformprozess an den Stützkörper (12) angeformt ist.

5. Dichtung nach einem der Ansprüche 1 bis 4, wobei der Stützkörper (12) zumindest einen axialen, mit dem Material des Dichtkörpers (11) gefüllten Durchgang (13) besitzt.

6. Dichtung nach einem der Ansprüche 1 bis 5, wobei das Material des Stützkörpers (12) ein polymeres Material ist.

7. Dichtung nach einem der Ansprüche 1 bis 6, wobei der axiale Querschnitt von zumindest dem Dichtkörper (11) bezogen auf eine radiale Symmetrieachse klappsymmetrisch ist.

8. Steuereinrichtung, umfassend ein mittels Druckbeaufschlagung, insbesondere Pneumatikdruckbeaufschlagung, axial verschiebliches erstes Bauteil (2) und ein stationäres zweites Bauteil (1), relativ zu dem das erste Bauteil (2) axial verschieblich geführt ist, wobei die beiden Bauteile (1, 2) mittels einer Dichtung (10) nach einem der Ansprüche 1 bis 7 radial gegeneinander derart abgedichtet sind, dass der Führungsabschnitt (17) des Stützkörpers (12) der Dichtung (10) im Betrieb der Steuereinrichtung axiale Führungsfunktion für das axial verschiebliche Bauteil (2) übernimmt.

9. Elektromagnetisch betätigtes Ventil (20), umfassend
- ein Dichtelement (32), das eingerichtet ist, in einer Schließposition einen Dichtsitz (31) zu verschließen,
- einen mit dem Dichtelement (31) gekoppelten, axial beweglichen Steuerkolben (2),
- eine Hülse, in welcher der Steuerkolben (2) axial verschieblich gelagert ist,
- eine elektrisch bestrombare Spule (40), wobei der Steuerkolben (2) durch elektrische Bestromung der Spule (40) entgegen einer auf den Steuerkolben (2) wirkenden mechanischen Belastung bewegbar ist,
**dadurch gekennzeichnet, dass** der Steuerkolben (2) in axialer Richtung eine Druckausgleichsbohrung (24) aufweist, wobei der Steuerkolben (2) und die Hülse (1) mittels einer Dichtung (10) nach einem der Ansprüche 1 bis 7 radial gegeneinander derart abgedichtet sind, dass der Führungsabschnitt (17) des Stützkörpers (12) der Dichtung (10) im Betrieb des Ventils (20) axiale Führungsfunktion für den Steuerkolben (2) übernimmt.

10. Ventil nach Anspruch 9, wobei der Dichtsitz (31) im Wesentlichen die gleiche Nennweite aufweist wie die radial innenliegenden Dichtlippen (15a, 15b).

11. Ventil nach Anspruch 9 oder 10, wobei der Steuerkolben (2) durch elektrische Bestromung der Spule (40) entgegen der auf den Steuerkolben (2) wirkenden mechanischen Belastung in eine Position bewegbar ist, in welcher das Dichtelement (32) die Schließposition einnimmt.

12. Ventil nach einem der Ansprüche 9 bis 11, wobei die auf den Steuerkolben (2) wirkende mechanische Belastung mittels einer Feder (22) bewirkt wird, welche den Steuerkolben (2) in die Schließposition drängt.

13. Verwendung einer Steuereinrichtung nach Anspruch 8 oder eines Ventils (20) nach einem der Ansprüche 9 bis 12 als Quersperrventil in einem Luftfedersystem eines Fahrzeugs.

14. Luftfederventilblock für ein Luftfedersystem eines Fahrzeugs, **gekennzeichnet durch** eine Steuereinrichtung nach Anspruch 8 oder ein Ventil (20) nach einem der Ansprüche 9 bis 12.

## Claims

1. A seal (10) for mutually sealing radially two members (1, 2) that are displaceable relative to each other axially, comprising
- a sealing body (11) of an elastomeric material with two axially spaced, radially exterior sealing lips (14a, 14b) and two axially spaced, radially interior sealing lips (15a, 15b), and
- a supporting body (12) bearing the sealing body (11) and consisting of a harder material than the sealing body (11), wherein the supporting body (12) has a radially exposed guiding portion (17) extending in the axial direction between two sealing lips (15a, 15b), wherein these two sealing lips (15a, 15b) extend beyond the guiding portion (17) in the radial direction,
**characterized in that** the material of the sealing body (11) penetrates the supporting body (12).

2. The seal according to claim 1, wherein the supporting body (12) has an anchoring portion (16) disposed opposite the guiding portion (17), the anchoring portion being arranged between two sealing lips (14a, 14b) and extending beyond these two sealing lips (14a, 14b) in the radial direction.

3. The seal according to claim 1 or 2, wherein the guiding portion (17) of the supporting body (12) is configured on a radially inwardly pointing surface of the seal (10).

4. The seal according to any of the claims 1 to 3, wherein the material of the sealing body (11) is formed onto the supporting body (12) in the primary forming process.

5. The seal according to any of the claims 1 to 4, wherein the supporting body (12) possesses at least one axial passage (13) filled with the material of the sealing body (11).

6. The seal according to any of the claims 1 to 5, wherein the material of the supporting body (12) is a polymeric material.

7. The seal according to any of the claims 1 to 6, wherein the axial cross section of at least the sealing body (11) is tilt-symmetric with reference to a radial axis of symmetry.

8. A control device, comprising a first member (2) that is displaceable axially by means of pressurization, in particular pneumatic pressurization, and a stationary second member (1) relative to which the first member (2) is guided axially displaceably, wherein the two members (1, 2) are mutually sealed radially by means of a seal (10) according to any of the claims 1 to 7, such that the guiding portion (17) of the supporting body (12) of the seal (10) performs an axial guidance function for the axially displaceable member (2) during operation of the control device.

9. An electromagnetically actuated valve (20), comprising
- a sealing element (32) which is adapted to close a sealing seat (31) when in a closed position,
- an axially movable control piston (2) coupled with the sealing element (31),
- a sleeve within which the control piston (2) is mounted so as to be axially displaceable,
- an electrically energizable coil (40), wherein the control piston (2) is movable, through electrical energizing of the coil (40), against a mechanical load acting on the control piston (2),
**characterized in that** the control piston (2) has a pressure compensation bore (24) in the axial direction, wherein the control piston (2) and the sleeve (1) are mutually sealed radially by means of a seal (10) according to any of the claims 1 to 7, such that the guiding portion (17) of the supporting body (12) of the seal (10) performs an axial guidance function for the control piston (2) during operation of the valve (20).

10. The valve according to claim 9, wherein the sealing seat (31) has substantially the same nominal width as the radially interior sealing lips (15a, 15b).

11. The valve according to claim 9 or 10, wherein the control piston (2) is movable, through electrical energizing of the coil (40), against the mechanical load acting on the control piston (2) into a position in which the sealing element (32) assumes the closed position.

12. The valve according to any of the claims 9 to 11, wherein the mechanical load acting on the control piston (2) is effected by means of a spring (22) which urges the control piston (2) into the closed position.

13. Use of a control device according to claim 8 or of a valve (20) according to any of the claims 9 to 12 as a transverse check valve in an air damping system of a vehicle.

14. An air-damping valve block for an air damping system of a vehicle, **characterized by** a control device according to claim 8 or a valve (20) according to any of the claims 9 to 12.

## Revendications

1. Joint d'étanchéité (10) destiné à l'étanchéification radiale mutuelle de deux composants (1,2) axialement déplaçables l'un par rapport à l'autre, comprenant
- un corps d'étanchéité (11) en matériau élastomère, ayant deux lèvres d'étanchéité (14a, 14b), radialement espacées et situées radialement à l'extérieur, ainsi que deux lèvres d'étanchéité (15a, 15b) radialement espacées et situées radialement à l'intérieur, et
- un corps d'appui (12) portant le corps d'étanchéité (11) et consistant en un matériau plus dur que le corps d'étanchéité (11),
cependant que le corps d'appui (12) comporte une section de guidage (17) radialement à découvert qui s'étend en direction axiale entre deux lèvres d'étanchéité (15a, 15b), cependant que ces deux lèvres d'étanchéité (15a, 15b) s'étendent, en direction radiale, au-delà de la section de guidage (17), **caractérisé en ce que** le matériau du corps d'étanchéité (11) interpénètre le corps d'appui (12).

2. Joint d'étanchéité selon la revendication 1, le corps d'appui (12) comportant une section d'ancrage (16) qui fait face à la section de guidage (17), est agencée entre deux lèvres d'étanchéité (14a, 14b) et s'étend, en direction radiale, au-delà de ces deux lèvres d'étanchéité (14a, 14b).

3. Joint d'étanchéité selon la revendication 1 ou 2, la section de guidage (17) du corps d'appui (12) étant réalisée dans une surface du joint d'étanchéité (10) tournée radialement vers l'intérieur.

4. Joint d'étanchéité selon une des revendications de 1 à 3, le matériau du corps d'étanchéité (11) étant surmoulé sur le corps d'appui (12) par processus de formage initial.

5. Joint d'étanchéité selon une des revendications de 1 à 4, **caractérisé en ce que** le corps d'appui (12) possède au moins un passage (13) axial remplit avec le matériau du corps d'étanchéité (11).

6. Joint d'étanchéité selon une des revendications de 1 à 5, le matériau du corps d'appui (12) étant un matériau polymère.

7. Joint d'étanchéité selon une des revendications de 1 à 6, la coupe transversale axiale d'au moins le corps d'étanchéité (11) étant, relativement à un axe radial de symétrie, symétrique par rabattement.

8. Dispositif de commande comprenant un premier composant (2) axialement déplaçable par application de pression, en particulier par application de pression pneumatique, et un deuxième composant (1), stationnaire, relativement auquel le premier composant (2) est guidé de manière axialement déplaçable, les deux composants (1,2) étant, au moyen d'un joint d'étanchéité (10) selon une des revendications de 1 à 7, étanchéifiés de telle manière radialement l'un contre l'autre que la section de guidage (17) du corps d'appui (12) du joint d'étanchéité (10) assume, lors du fonctionnement du dispositif de commande, une fonction de guidage axiale pour le composant (2) axialement déplaçable.

9. Soupape (20) actionnée par voie électromagnétique, comprenant
- un élément d'étanchéité (32) conçu pour, dans une position de fermeture, fermer un siège d'étanchéité (31),
- un piston de commande (2) axialement muable couplé à l'élément d'étanchéité (31),
- une douille dans laquelle le piston de commande (2) est logé de manière axialement déplaçable,
- une bobine (40) pouvant être alimentée électriquement, le piston de commande (2) pouvant être mis en mouvement par alimentation électrique de la bobine (40) dans le sens contraire à une charge mécanique agissant sur le piston de commande (2),
**caractérisé en ce que** le piston de commande (2) comporte en direction axiale un alésage de compensation de pression (24), le piston de commande (2) et la douille (1) étant étanchéisés radialement de telle façon l'un par rapport à l'autre au moyen d'un joint d'étanchéité (10) selon une des revendications de 1 à 7 que la section de guidage (17) du corps d'appui (12) du joint d'étanchéité (10) assume, lors du fonctionnement de la soupape (20), une fonction de guidage axiale pour le piston de commande (2).

10. Soupape selon la revendication 9, cependant que le siège d'étanchéité (31) présente essentiellement la même largeur nominale que les lèvres d'étanchéité (15a, 15b) situées radialement à l'intérieur.

11. Soupape selon la revendication 9 ou 10, le piston de commande (2) étant, par alimentation électrique de la bobine (40), muable dans le sens contraire à la charge mécanique agissant sur le piston de commande (2), jusque dans une position dans laquelle l'élément d'étanchéité (32) adopte la position de fermeture.

12. Soupape selon une des revendications de 9 à 11, la charge mécanique qui agit sur le piston de commande (2) étant engendrée par un ressort (22) qui pousse le piston de commande (2) dans la position de fermeture.

13. Utilisation d'un dispositif de commande selon la revendication 8 ou d'une soupape (20) selon une des revendications de 9 à 12 comme soupape anti-retour dans un système de suspension pneumatique d'un véhicule.

14. Bloc de soupapes de suspension pneumatique destiné à un système de suspension pneumatique d'un véhicule, **caractérisé par** un dispositif de commande selon la revendication 8 ou par une soupape (20) selon une des revendications de 9 à 12.
